# EUROPEAN PATENT APPLICATION

(11) **EP 4 362 571 A1**
(43) Date of publication of application: **01.05.2024**
(21) Application number: 22827560.8
(22) Date of filing: 21.06.2022
(51) Int. Cl.: H04W 64/00

(54) **POSITIONING METHODS AND APPARATUS, AND ELECTRONIC DEVICE**

(30) Priority: 22.06.2021 CN 202110694013
(71) Applicant: Vivo Mobile Communication Co., Ltd., Dongguan, Guangdong 523863 (CN)
(72) Inventor: WANG, Yuanyuan, Dongguan, Guangdong 523863 (CN); PAN, Xiang, Dongguan, Guangdong 523863 (CN); SUN, Peng, Dongguan, Guangdong 523863 (CN); WU, Huaming, Dongguan, Guangdong 523863 (CN)
(74) Representative: Conti, Marco
(86) International application number: PCT/CN2022/100080
(87) International publication number: WO 2022/268067

(57) **Abstract**

This application discloses a positioning method and apparatus, and a related device, and pertains to the field of communications technologies. The method includes: receiving, by a terminal, first positioning assistance data, where the first positioning assistance data is used to indicate configuration information for an on-demand PRS; and/or sending, by the terminal, positioning assistance data request information, where the positioning assistance data request information is used to indicate related request information for an on-demand PRS.

## Description

### CROSS-REFERENCE TO RELATED APPLICATIONS

This application claims priority to Chinese Patent Application No. 202110694013.3, filed in China on June 22, 2021, which is incorporated herein by reference in its entirety.

### TECHNICAL FIELD

This application pertains to the field of communications technologies, and specifically relates to a positioning method and apparatus, and a related device.

### BACKGROUND

Configuration information for positioning reference signal (Positioning Reference Signal, PRS) in the prior art is determined by a next generation NodeB (next Generation Node Base, gNB) or is determined during network installation. When there are no positioning requirements, a positioning reference signal may be still sent. In a case of emergency or low-latency requirements, measurement and calculation need to wait until a specific transmission period. Consequently, the positioning reference signal cannot be transmitted in a timely manner. In other words, a configuration mode for positioning reference signal in the prior art lacks flexibility, which results in problems such as waste of positioning resources or failures in reporting a measurement result in a timely manner.

### SUMMARY

Embodiments of this application provide a positioning method and apparatus, and a related device, so as to resolve the problem of lack of flexibility in an existing method for determining positioning reference signal.

According to a first aspect, a positioning method is provided, including:
receiving, by a terminal, first positioning assistance data, where the first positioning assistance data is used to indicate configuration information for an on-demand PRS;
   and/or,
sending, by the terminal, positioning assistance data request information, where the positioning assistance data request information is used to indicate related request information for an on-demand PRS.

According to a second aspect, a positioning method is provided, including:
sending, by a network-side device, first positioning assistance data to a terminal, where the first positioning assistance data is used to indicate configuration information for an on-demand PRS;
   and/or,
receiving, by the network-side device, positioning assistance data request information sent by a terminal, where the positioning assistance data request information is used to indicate related request information for an on-demand PRS.

According to a third aspect, a positioning apparatus is provided, including:
a receiving module, configured to receive first positioning assistance data, where the first positioning assistance data is used to indicate configuration information for an on-demand PRS;
   and/or,
a sending module, configured to send positioning assistance data request information, where the positioning assistance data request information is used to indicate related request information for an on-demand PRS.

According to a fourth aspect, a positioning apparatus is provided, including:
a sending module, configured to send first positioning assistance data, where the first positioning assistance data is used to indicate configuration information for an on-demand PRS;
   and/or,
a receiving module, configured to receive positioning assistance data request information, where the positioning assistance data request information is used to indicate related request information for an on-demand PRS.

According to a fifth aspect, a terminal is provided, including a processor, a memory, and a program or instructions stored in the memory and capable of running on the processor, and when the program or the instructions are executed by the processor, the steps of the positioning method according to the first aspect are implemented.

According to a sixth aspect, a network-side device is provided, including a processor, a memory, and a program or instructions stored in the memory and capable of running on the processor, and when the program or the instructions are executed by the processor, the steps of the positioning method according to the second aspect are implemented.

According to a seventh aspect, a readable storage medium is provided, where a program or instructions are stored in the readable storage medium, and when the program or the instructions are executed by a processor, the steps of the positioning method according to the first aspect or the second aspect are implemented.

According to an eighth aspect, a chip is provided, where the chip includes a processor and a communications interface, the communications interface is coupled to the processor, and the processor is configured to run a program or instructions for the network-side device to implement the positioning method according to the first aspect or the second aspect.

According to a ninth aspect, a computer program product is provided, where the computer program product is stored in a storage medium, and the computer program product is executed by at least one processor to implement the method according to the first aspect or the method according to the second aspect.

In the embodiments of this application, the terminal receives the first positioning assistance data, where the first positioning assistance data is used to indicate configuration information for an on-demand PRS; and/or the terminal sends the positioning assistance data request information, where the positioning assistance data request information is used to indicate related request information for an on-demand PRS. The terminal can select the PRS on demand by receiving the first positioning assistance data and/or sending the positioning assistance data request information. Such manner of dynamically determining a PRS enables adjustment made according to an actual situation, thereby improving flexibility of determining the PRS.

### BRIEF DESCRIPTION OF DRAWINGS

FIG. 1 is a structural diagram of a network system according to an embodiment of this application;
FIG. 2 is a flowchart of a positioning method according to an embodiment of this application;
FIG. 3 is another flowchart of a positioning method according to an embodiment of this application;
FIG. 4a is a flowchart of a key information obtaining process according to an embodiment of this application;
FIG. 4b is another flowchart of a key information obtaining process according to an embodiment of this application;
FIG. 4c is still another flowchart of a positioning method according to an embodiment of this application;
FIG. 5 is a structural diagram of a positioning apparatus according to an embodiment of this application;
FIG. 6 is another structural diagram of a positioning apparatus according to an embodiment of this application;
FIG. 7 is a structural diagram of a communication device according to an embodiment of this application;
FIG. 8 is a structural diagram of a terminal according to an embodiment of this application; and
FIG. 9 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

In the specification and claims of this application, the terms such as "first" and "second" are intended to distinguish between similar objects but do not necessarily indicate a specific order or sequence. It should be understood that the data used in this way is interchangeable in appropriate circumstances so that the embodiments of this application can be implemented in other orders than the order illustrated or described herein, and "first" and "second" are usually for distinguishing same-type objects but not limiting the number of objects, for example, a first object may be one or multiple. In addition, "and/or" in this specification and claims indicates at least one of connected objects, and the symbol "/" generally indicates that the associated objects are in an "or" relationship. In this application, 'transmission' refers to transfer of signals, rather than the narrow definition of signal sending.

It should be noted that techniques described in the embodiments of this application are not limited to a long term evolution (Long Term Evolution, LTE) or LTE-advanced (LTE-Advanced, LTE-A) system, and may also be applied to various wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. Techniques described herein may be used in the aforementioned systems and radio technologies, and may also be used in other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

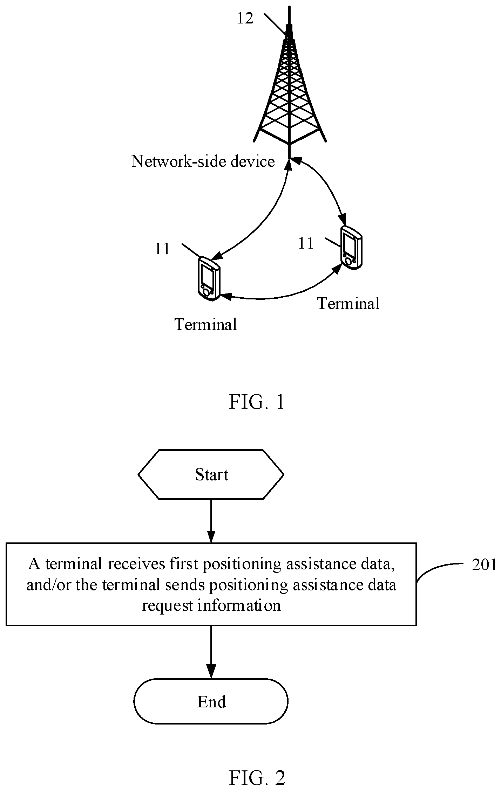

FIG. 1 is a block diagram of a wireless communication system to which the embodiments of this application are applicable. The wireless communication system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), a wearable device (Wearable Device) or vehicle user equipment (Vehicle User Equipment, VUE), or pedestrian user equipment (Pedestrian User Equipment, PUE). The wearable device includes: a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmission and reception point (Transmission and Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited.

The following describes in detail a positioning method provided in the embodiments of this application by using specific embodiments and application scenarios thereof with reference to the accompanying drawings.

Refer to FIG. 2. FIG. 2 is a flowchart of a positioning method according to an embodiment of this application. The positioning method includes:

Step 201: A terminal receives first positioning assistance data, where the first positioning assistance data is used to indicate configuration information for an on-demand PRS; and/or the terminal sends positioning assistance data request information, where the positioning assistance data request information is used to indicate related request information for an on-demand PRS.

The terminal in this application may be understood as a terminal that has subscribed to an on-demand service, or may be understood as a terminal that supports an on-demand service. In the above, the first positioning assistance data may be sent by a network-side device, for example, a location management function (Location Management Function, LMF), an access and mobility management function (Access and Mobility Management Function, AMF), or a base station sends the first positioning assistance data to the terminal. The first positioning assistance data is used to indicate the configuration information for the on-demand PRS, for example, the first positioning assistance data includes at least one of the following:
first key information used for parsing the on-demand PRS, which can be understood as first key information used for parsing assistance information for the on-demand PRS;
at least one PRS configuration set used for on-demand selection;
resource information used for the on-demand PRS; and
response information used for the on-demand PRS.

In the above, the key information is used by the terminal to parse the assistance information for the on-demand (on demand) PRS, and the at least one PRS configuration set may include identification information of the PRS configuration set.

In the above, the on-demand PRS may be understood as one or more pre-configured PRSs, or may be understood as a changeable PRS (according to a protocol before release 17 (Release17, R17), the PRS is configured during network installation or configured by the base station itself, and the UE or LMF cannot affect its configuration, while the on-demand PRS may be configured on demand based on a request of the UE or the LMF).

It should be noted that "on demand" in this application can also be understood as "selected on demand".

In an embodiment, the PRS may be a positioning signal or a reference signal for positioning, and the positioning signal includes at least one of the following: downlink (Down Link, DL) PRS, channel-state information reference signal (channel-state information reference signals, CSI-RS), synchronization signal block (sync signal block, SSB), tracking reference signal (tracking reference signal, TRS), and sounding reference signal.

The resource information used for the on-demand PRS includes at least one of the following:
a time-domain resource used for an on-demand PRS by a network-side device;
a frequency-domain resource used for the on-demand PRS by the network-side device;
a bandwidth used for the on-demand PRS by the network-side device;
a duration used for the on-demand PRS by the network-side device;
a periodicity used for the on-demand PRS by the network-side device;
a time-domain offset used for the on-demand PRS by the network-side device;
a start time used for the on-demand PRS by the network-side device;
a symbol used for the on-demand PRS by the network-side device; and
a repetition count used for the on-demand PRS by the network-side device.

Further, the resource information used for the on-demand PRS includes at least one of the following:
a maximum number of positioning reference signal resources used for the on-demand PRS by a network-side device;
a maximum positioning reference signal resource sets used for the on-demand PRS by the network-side device;
a maximum number of TRPs used for the on-demand PRS by the network-side device;
a maximum bandwidth used for the on-demand PRS by the network-side device;
a maximum duration used for the on-demand PRS by the network-side device;
a minimum periodicity used for the on-demand PRS by the network-side device;
a maximum periodicity used for the on-demand PRS by the network-side device;
an earliest time-domain offset used for the on-demand PRS by the network-side device;
an earliest start time used for the on-demand PRS by the network-side device;
a maximum number of symbols used for the on-demand PRS by the network-side device; and
a maximum repetition count used for the on-demand PRS by the network-side device.

The response information used for the on-demand PRS includes at least one of the following:
error indication information;
error type information;
information of no available resource;
error cause information;
acknowledgment (Acknowledgement, ACK) information;
negative acknowledgment (Negative Acknowledgement, NACK) information;
information of not supporting on-demand PRS;
identification information of a target PRS configuration set, where the at least one PRS configuration set includes the target PRS configuration set;
request success indication information or request failure indication information;
configuration success indication information or configuration failure indication information; and
configuration information for the target PRS configuration set.

The on-demand PRS procedure may be initiated by the network-side device, for example, the network-side device sends the first positioning assistance data to the terminal. The on-demand PRS procedure may alternatively be initiated by the terminal. For example, the terminal sends positioning assistance data request information to the network-side device, where the positioning assistance data request information carries at least one of the following:
on-demand positioning reference signal PRS request information; and
on-demand PRS key request information.

Specifically, the on-demand PRS key request information is used to obtain key information, so as to parse assistance information for the on-demand PRS by using the key information.

In the above, the terminal may determine the on-demand PRS based on the received first positioning assistance data, or the terminal may determine the on-demand PRS by sending the positioning assistance data request information or request to determine the on-demand PRS, or the terminal may determine the on-demand PRS based on the first positioning assistance data and the positioning assistance data request information. It should be noted that the step for receiving the first positioning assistance data by the terminal may be before the terminal sends the positioning assistance data request information, or may be after the terminal sends the positioning assistance data request information, which can be flexibly adjusted according to the actual situation. This is not limited herein.

In this embodiment, the terminal receives the first positioning assistance data, where the first positioning assistance data is used to indicate configuration information for an on-demand PRS; and/or the terminal sends the positioning assistance data request information, where the positioning assistance data request information is used to indicate related request information for an on-demand PRS. The terminal can select the PRS on demand by receiving the first positioning assistance data and/or sending the positioning assistance data request information. Such manner of dynamically determining a PRS enables adjustment made according to an actual situation, thereby improving flexibility of determining the PRS, thereby improving effective utilization of PRSs.

The first positioning assistance data may be sent to the terminal by the network-side device, for example, may be sent to the terminal by the base station (be sent by the base station in a broadcast manner), or may be sent to the terminal by the LMF.

The on-demand PRS may be determined by the network-side device (such as the base station or the LMF), or may be determined by the terminal.

The on-demand PRS key request information may be carried in the positioning assistance data request information and sent separately. In this case, the on-demand PRS request information is not carried in the positioning assistance data request information. The on-demand PRS key request information may alternatively be sent together with the on-demand PRS request information. In this case, the positioning assistance data request information carries the on-demand PRS key request information and the on-demand PRS request information. The terminal may send the positioning assistance data request information to the LMF.

The on-demand PRS key request information may alternatively be sent without being carried in the positioning assistance data request information. For example, the on-demand PRS request information is carried in the positioning assistance data request information for sending, and the on-demand PRS key request information is carried in a preset service request message, a preset registration request message, or an LTE positioning protocol (LTE Positioning Protocol, LPP) message for transmission.

In a case that the terminal is in a connected state, the preset service request message is a service request message (which may be further understood as a user plane session connection) that carries no protocol data unit (Protocol Data Unit, PDU) session setup; or in a case that the terminal is in a connected state, the preset service request message is a service request message carrying the on-demand PRS key request information. Further, the preset service request may be understood as a dedicated or special service request, where the service request is used for requesting a key (for example, requesting an on-demand PRS key). In another possible implementation, the preset service request is an enhanced message of the service request, and in a case that the service request is triggered by a preset service request, the preset service request may carry a key request message.

Alternatively, in a case that the terminal is in a non-connected state, the preset service request message is sent through an SRB2 in signaling radio bearer (Signaling Radio Bearer, SRB) or a data radio bearer (Data Radio Bearer, DRB). The terminal has the on-demand PRS key request information carried in a preset service request message, a preset registration request message or an LPP message and sends it to an AMF or a base station.

In the above, sending of the on-demand PRS key request information is triggered based on at least one of the following:
first preset quality of service (Quality of Service, QoS) condition; where, in this case, sending of the on-demand PRS key request information is triggered based on a first preset condition that is set;
measurement quality of positioning signal measurement for the terminal being less than a first threshold;
positioning quality of location information for positioning of the terminal being less than a second threshold;
location information for positioning of the terminal being not satisfying a second preset QoS condition;
on-demand PRS measurement request information or the first positioning assistance data being received by the terminal, where the on-demand PRS measurement request information is used to indicate to perform measurement on the on-demand PRS;
a measurement result of positioning signal measurement for the terminal being less than or greater than a third threshold; where, for example, a reference signal received power (Reference Signal Received Power, RSRP) is less than 30dbm, or a reference signal time difference (Reference Signal Time Difference, RSTD) is greater than a distance of (TRP1-TRP2); and
an on-demand PRS service being subscribed by the terminal or an on-demand PRS service being requested by the terminal.

In the above, the positioning signal can be understood as a reference signal for positioning, and the positioning signal includes at least one of the following: downlink positioning reference signal (Downlink Positioning Reference Signal, DL PRS), channel state information reference signal (channel-state information reference signals, CSI-RS), synchronization signal block (sync signal block, SSB), tracking reference signal (tracking reference signal, TRS), sounding reference signal (sounding reference signal, SRS), and the like.

The location information for positioning of the terminal includes but is not limited to: absolute location information (such as longitude and latitude information), relative location information, and the like. Measurement information for the positioning signal of the terminal includes, but is not limited to: a measurement result of reference signal time difference (Reference Signal Time Difference, RSTD), a measurement result of round-trip delay (Round-Trip Rime, RTT) or angle of arrival (Angle Of Arrival, AOA), a measurement result of angle of departure (Angle of Departure, AOD), RSRP, and the like.

The terminal receives the first positioning assistance data before sending the positioning assistance data request information, and the first positioning assistance data is used for at least one PRS configuration set for selection on demand. A PRS configuration set in the at least one PRS configuration set is a PRS configuration set preconfigured by the network-side device, and the at least one PRS configuration set includes a target PRS configuration set. In a case that the target PRS configuration set satisfies a first condition, the on-demand PRS request information includes at least one of the following:
identification information of the target PRS configuration set;
location information of the terminal; and
configuration parameter.

The preset PRS configuration set may include at least one of the following:
configuration parameter;
preconfigured PRS configuration identification information;
a maximum supported number of frequency layers;
a maximum supported number of supported TRPs;
a maximum supported volume of supported resource data;
a maximum supported number of supported resource sets;
a maximum supported bandwidth;
a maximum supported repetition count;
an earliest PRS start time;
a latest PRS start time; and
a maximum PRS duration.

The first condition includes at least one of the following:
that at least one configuration parameter in the target PRS configuration set includes multiple optional values;
that at least one configuration parameter in the target PRS configuration set does not satisfy a preset requirement of the terminal;
that at least one configuration parameter in the target PRS configuration set is a default configuration parameter;
that at least one configuration parameter in the target PRS configuration set includes maximum configurable range information; and
that at least one configuration parameter in the target PRS configuration set includes a maximum value of selectable values of the configuration parameter.

In the above, the configuration parameter includes at least one of the following:
bandwidth information for a PRS corresponding to the identification information of the target PRS configuration set;
a start time for sending the PRS corresponding to the identification information of the target PRS configuration set;
an end time for sending the PRS corresponding to the identification information of the target PRS configuration set;
a duration for sending the PRS corresponding to the identification information of the target PRS configuration set;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

In the above, the selected transmission and reception point TRP set is a TRP set selected by the terminal. Similarly, the number of selected TRPs is also the number of TRPs selected by the terminal. In an embodiment, the above-mentioned "selected" can be both understood as being selected by the terminal on demand. In another embodiment, if the configuration parameter is included in information sent by the terminal, for example, if the on-demand PRS request information includes the configuration parameter, the above "selected" can be understood as being selected by the terminal on demand. If the configuration parameter is included in information received by the terminal, for example, the first positioning assistance data includes the configuration parameter, and the above "selected" can be understood as being selected by the network-side device on demand.

In the above, in a case that the target PRS configuration set does not satisfy the first condition, the on-demand PRS request information includes the identification information of the target PRS configuration set.

Optionally, the on-demand PRS request information includes at least one of the following:
indication information for indicating an on-demand PRS;
assistance information for a PRS selected on demand by the terminal;
location information of the terminal;
expected angle of departure information;
measurement information for a synchronization signal block (Synchronization Signal Block, SSB for short) measured by the terminal; and
measurement information for a channel state information reference signal (Channel-state information Reference Signal, CSI-RS) measured by the terminal.

The expected angle of departure information is an expected value and/or expected range of the angle of departure, for example (ϕ_{AOD} - Δϕ_{AOD}/2, ϕ_{AOD} + Δϕ_{AOD}/2). In another embodiment, it can be expressed as an expected value and/or expected range of the angle of arrival, for example, (ϕ_{AOA} - Δϕ_{AOA}/2, (ϕ_{AOA} + Δϕ_{AOA}/2)). In addition, ϕ_{AOD} may be an azimuth angle, a central angle, or a vertical angle.

In one case, in a case that the terminal measures a positioning reference signal or reports the location information of the terminal before sending the positioning assistance data request information, the on-demand PRS request information includes at least one of the following:
location information of the terminal;
expected angle of departure information; and
assistance information for a PRS selected on demand by the terminal.

The assistance information for the PRS selected on demand includes at least one of the following:
bandwidth information for the PRS selected on demand;
a start time for sending the PRS selected on demand;
an end time for sending the PRS selected on demand;
a duration for sending the PRS selected on demand;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

The location information of the terminal includes the location information for positioning of the terminal, including but not limited to: absolute location information (such as longitude and latitude information), relative location information, and the like. The positioning method used is not specifically limited herein.

In another embodiment, the location information of the terminal includes signal measurement information, which may include: a measurement result of reference signal time difference (Reference Signal Time Difference, RSTD), a measurement result of round-trip time delay (round-trip time, RTT) and angle of arrival (Angle Of Arrival, AOA), a measurement result of departure angle AOD, RSRP, and the like.

In the above case, it can be understood that the terminal has measured a positioning reference signal, and determines on-demand PRS request information based on a positioning signal measurement result and/or the location information of the terminal, or the like.

In another case, in a case that the terminal has obtained the location information of the terminal or has not measured the positioning reference signal before sending the positioning assistance data request information, the on-demand PRS request information includes at least one of the following:
location information of the terminal, for example, positioning information such as enhanced cell-ID-based positioning technology (Enhanced Cell-ID, ECID) or global navigation satellite system (Global Navigation Satellite System, GNSS);
measurement information for an SSB measured by the terminal;
measurement information for a CSI-RS measured by the terminal; and
assistance information for a PRS selected on demand by the terminal.

In the above case, it can be understood that the on-demand PRS request information is determined based on a measurement result of a communication signal such as SSB in a case that the terminal does not measure the positioning reference signal; or it can be understood that the terminal determines the on-demand PRS request information based on a previous radio access technology-independent (rat-independent) positioning result.

In an embodiment of this application, after the terminal sends the positioning assistance data request information, the method further includes:
receiving second positioning assistance data, where the second positioning assistance data includes at least one of the following:
configuration information for a target PRS, where the target PRS is a PRS selected on demand; and
activation information for the target PRS.

The target PRS may be selected or configured by the network-side device, and the target PRS is a PRS in the target PRS configuration set. It should be noted that the target PRS is at least one PRS or at least one group of PRSs (in this case, the target PRS includes multiple PRSs). If at least two PRS configurations or at least two groups of PRS configurations are configured in the configuration information for the target PRS, the terminal may also need the activation information for the target PRS to activate a configured PRS. In this case, the second positioning assistance data may include the configuration information for the target PRS and the activation information for the target PRS, or the configuration information for the target PRS and the activation information for the target PRS are transmitted in different information elements. If the second positioning assistance data includes only the configuration information for the target PRS, the terminal needs to additionally obtain the activation information for the target PRS. If only one PRS configuration or a group of PRS configurations are configured in the configuration information for the target PRS, the terminal does not need to activate the configured PRS.

The target PRS satisfies at least one of the following:
a resource of the target PRS does not conflict with a resource of a first PRS in a same cell, where the first PRS is another PRS in the same cell as the target PRS;
a resource of the target PRS in a first serving cell does not conflict with PRS resources of the first serving cell;
a resource of the target PRS in the first serving cell does not conflict with PRS resources of a second serving cell, where the first serving cell and the second serving cell are different serving cells;
a resource of the target PRS in a non-serving cell does not conflict with PRS resources of a serving cell;
a resource of the target PRS in a first non-serving cell does not conflict with PRS resources of the first non-serving cell; and
a resource of the target PRS in the first non-serving cell does not conflict with PRS resources of a second non-serving cell, where the first non-serving cell and the second non-serving cell are different non-serving cells.

The first PRS may include an on-demand PRS (such as a PRS selected on demand, or a pre-configured PRS for on-demand selection) and/or other PRSs (for example, positioning reference signals in the prior art).

In the above, in a case that the resource of the target PRS conflicts with the resource of the second PRS, the positioning method further includes one of the following:
receiving, by the terminal, the target PRS or the second PRS based on a priority of the target PRS and a priority of the second PRS;
expecting, by the terminal, to cancel sending of the second PRS;
receiving, by the terminal, the target PRS and the second PRS; and
receiving, by the terminal, indication information for indicating whether the second PRS is sent.

The second PRS is a PRS other than the target PRS.

For example, if a priority of the target PRS is higher than that of the second PRS, the target PRS is received, and if the priority of the target PRS is lower than that of the second PRS, the second PRS is received.

The terminal receiving the target PRS and the second PRS may be understood as the terminal receiving the target PRS and the second PRS at the same time, or the terminal receiving the target PRS and the second PRS separately. For example, the target PRS and the second PRS coexist, or the target PRS is on the resource of the second PRS and is consistent with the second PRS. In the above, the coexistence can be understood as the target PRS and the second PRS may be sent on the same resource, for example, time-domain resource, frequency-domain resource, or space-domain resource. In an embodiment, the target PRS and the second PRS are sent in a code division manner. In another embodiment, the target PRS multiplexes the second PRS to generate the target PRS, that is, on the resource of the second PRS, the signal is consistent with the second PRS, the target PRS is sent on a resource other than the second PRS, and the target PRS is a PRS with a specific relationship with the second PRS, for example, sequence generation rules for the target PRS and the second PRS are consistent.

After the terminal sends the on-demand PRS key request information, the positioning method further includes:
receiving, by the terminal, second key information, where the second key information is used for parsing assistance information for a target PRS, and the target PRS is a PRS selected on demand. The target PRS may be selected by the network-side device, and the target PRS may be a PRS in the target PRS configuration set.

The second key information may be carried in the positioning assistance data sent by the network-side device, for example, the first positioning assistance data or positioning assistance data received at other times, or the second key information may be carried in a response message from the network-side device for the on-demand PRS key request information sent by the terminal, for example, being carried in a preset service response message, a preset registration response message, or an LPP message. In addition, an encryption key can also be carried in the broadcast information.

The second key information includes validity information, and the validity information includes at least one of the following:
time information, such as duration information, validity start time information, or validity end time information;
region information, for example, being valid in a specific region, such as a cell range, a timing advance group (Timing Advance Group, TAG) range, an expected angle range, a PRS resource coverage range, beam identification information for sending a positioning reference signal, or beam direction information for sending the positioning reference signal;
event information, where, for example, the key is expired when an event occurred; and
spatial relation information, for example, being validity under a specific spatial relation.

The second key information includes key information of at least one key.

The at least one key includes at least one of the following:
static key;
dynamic key;
on-demand key; and
at least two levels of keys, for example, a primary key and a secondary key.

In addition to key information of at least one key, the second key information may further include at least one of the following:
validity identification information;
group identification information;
scrambling code identification information;
usable broadcast type information;
cell identification information;
TRP identification information;
beam identification information for sending a positioning reference signal;
beam direction information for sending the positioning reference signal;
identification information of the positioning reference signal; and
spatial relation identification information.

In an embodiment, if the encryption key includes the key information of at least one key, it can be sent to the terminal in different manners, for example, a part of the key is in the positioning assistance data and another part of the key is in the positioning reference signal; or a part of the key is in the positioning assistance data, and another part of the key is in the broadcast information; or a part of the key is in a registration request response message or a registration service request response message and another part of the key is in the broadcast information.

After obtaining the second key information, the terminal may include the second key information in the positioning assistance data request information and send it to the network-side device.

The second key information may be sent by an LMF to the terminal (in a unicast manner), or the second key information may be sent by the LMF to the base station, and then the base station sends the second key information in a broadcast manner.

The terminal may send the on-demand PRS request information to the LMF, and the on-demand PRS request information may include one or more of the following example information:
identification information of the target PRS configuration set;
a physical cell identity;
a global cell identity;
a TRP identifier of a candidate NR TRP for measurement;
SSB measurement information;
CSI-RS measurement information;
expected angle of departure information; and
assistance information for a PRS selected on demand.

The assistance information for the PRS selected on demand includes at least one of the following:
SSB configuration for requested TRPs (SSB Configuration for requested TRPs);
desired beam direction (Desired Beam Direction);
DL-PRS configuration parameter (DL-PRS Configuration Parameter);
maximum number of frequency layers (Maximum Number of Frequency Layers);
DL-PRS positioning frequency layer information (DL-PRS Positioning Frequency Layer Information);
DL-PRS subcarrier spacing (DL-PRS Subcarrier Spacing);
DL-PRS resource bandwidth (DL-PRS Resource Bandwidth);
DL-PRS start PRB (DL-PRS Start PRB);
DL-PRS frequency domain point A (DL-PRS PointA);
DL-PRS comb size N (DL-PRS Comb Size N);
DL-PRS cyclic prefix (DL-PRS Cyclic Prefix);
DL-PRS configuration per frequency layer (DL-PRS Configuration per Frequency Layer);
DL-PRS identifier (identifier is ID, which can also be understood as identification information);
DL-PRS PCI;
absolute radio frequency channel number (Absolute Radio Frequency Channel Number, ARFCN);
5G cell global identity (NR Cell Global Identity, NCGI);
maximum number of DL-PRS resource sets (Maximum Number of DL-PRS Resource Sets);
DL-PRS resource set information (DL-PRS Resource Set Information);
DL-PRS resource set identifier (DL-PRS Resource Set ID);
DL-PRS periodicity and resource set slot offset (DL-PRS Periodicity and Resource Set Slot Offset);
DL-PRS resource repetition factor (DL-PRS Resource Repetition Factor);
DL-PRS resource time gap (DL-PRS Resource Time Gap);
number of symbols for DL-PRS (DL-PRS Number of Symbols);
DL-PRS muting option 1 (DL-PRS Muting Option 1);
DL-PRS muting option 2 (DL-PRS Muting Option 2);
DL-PRS resource power information (DL-PRS Resource Power);
maximum number of DL-PRS resources per DL-PRS resource set (Maximum Number of DL-PRS Resources per Set);
DL-PRS resource information (DL-PRS Resource Information);
DL-PRS resource identifier (DL-PRS Resource ID);
DL-PRS sequence identifier (DL-PRS Sequence ID);
DL-PRS RE offset (DL-PRS RE Offset);
DL-PRS resource slot offset (DL-PRS Resource Slot Offset); and
DL-PRS resource symbol offset (DL-PRS Resource Symbol Offset).

As described in Table 1, in a case that a corresponding parameter is yes, the terminal or LMF can trigger the on-demand PRS selection procedure.

**Table 1**

| Parameter | Terminal | LMF |
|---|---|---|
| DL-PRS start time and duration (DL-PRS Start Time and Duration) | Yes | Yes |
| Desired number of TRPs (Desired Number of TRPs) | Yes | No |
| SSB configuration for requested TRPs (SSB Configuration for requested TRPs) | Yes | No |
| Desired beam direction (Desired Beam Direction) | Yes | No |
| Pre-defined configuration (CHOICE A: Pre-defined Configuration) | | |
| DL-PRS configuration identifier (DL-PRS Configuration Identifier) | Yes | Yes |
| DL-PRS configuration parameter (CHOICE B: DL-PRS Configuration Parameter) | | |
| Maximum number of frequency layers (Maximum Number of Frequency Layers) | Yes | Yes |
| DL-PRS positioning frequency layer information (DL-PRS Positioning Frequency Layer Information) | | |
| DL-PRS subcarrier spacing (DL-PRS Subcarrier Spacing) | No | No |
| DL-PRS resource bandwidth (DL-PRS Resource Bandwidth) | Yes | Yes |
| DL-PRS start PRB (DL-PRS Start PRB) | No | No |
| DL-PRS frequency domain point A (DL-PRS PointA) | No | No |
| DL-PRS comb size N (DL-PRS Comb Size N) | No | Yes |
| DL-PRS cyclic prefix (DL-PRS Cyclic Prefix) | No | No |
| DL-PRS configuration per frequency layer (DL-PRS Configuration per Frequency Layer) | | |
| DL-PRS ID/PCI, ARFCN/NCGI | Yes | No |
| Maximum number of DL-PRS resource sets (Maximum Number of DL-PRS Resource Sets) | Yes | Yes |
| DL-PRS resource set information (DL-PRS Resource Set Information) | | |
| DL-PRS resource set identifier (DL-PRS Resource Set ID) | Yes | Yes |
| DL-PRS periodicity and resource set slot offset (DL-PRS Periodicity and Resource Set Slot Offset) | Yes | Yes |
| DL-PRS resource repetition factor (DL-PRS Resource Repetition Factor) | Yes | Yes |
| DL-PRS resource time gap (DL-PRS Resource Time Gap) | Yes | Yes |
| Number of symbols for DL-PRS (DL-PRS Number of Symbols) | Yes | Yes |
| DL-PRS muting option 1 (DL-PRS Muting Option 1) | No | Yes |
| DL-PRS muting option 2 (DL-PRS Muting Option 2) | No | Yes |
| DL-PRS resource power information (DL-PRS Resource Power) | No | Yes |
| Maximum number of DL-PRS resources per DL-PRS resource set (Maximum Number of DL-PRS Resources per Set) | Yes | Yes |
| DL-PRS resource information (DL-PRS Resource Information) | | |
| DL-PRS resource identifier (DL-PRS Resource ID) | Yes | Yes |
| DL-PRS sequence identifier (DL-PRS Sequence ID) | No | Yes |
| DL-PRS RE offset (DL-PRS RE Offset) | No | Yes |
| DL-PRS resource slot offset (DL-PRS Resource Slot Offset) | No | Yes |
| DL-PRS resource symbol offset (DL-PRS Resource Symbol Offset) | No | Yes |
| DL-PRS QCL information (DL-PRS QCL-Info) | Yes | Yes |

As described in Table 2, in a case that a corresponding parameter is yes, the terminal or LMF can trigger the on-demand PRS selection procedure.

**Table 2**

| Parameter | Terminal | LMF |
|---|---|---|
| Start/end time of DL PRS transmission (Start/end time of DL PRS transmission) | No | Yes |
| DL PRS resource bandwidth (DL PRS resource bandwidth) | Yes | Yes |
| DL-PRS resource set identifier (DL-PRS resource set IDs); | No | Yes (corresponding to on/off of a specific PRS resource set) |
| DL PRS resource ID (DL PRS resource IDs) | No | Yes (corresponding to on/off of a specific PRS resource) |
| DL PRS transmission periodicity and offset (DL PRS transmission periodicity and offset) | Yes | Yes |
| DL PRS resource repetition factor (DL PRS resource repetition factor) | No | No |
| Number of DL PRS symbols per DL PRS resource (Number of DL PRS symbols per DL PRS resource) | No | No |
| DL PRS muting pattern (DL PRS muting patterns) | No | No |
| DL PRS QCL information (DL PRS QCL information) | Yes | No (assuming that the TRP will also provide QCL information) |

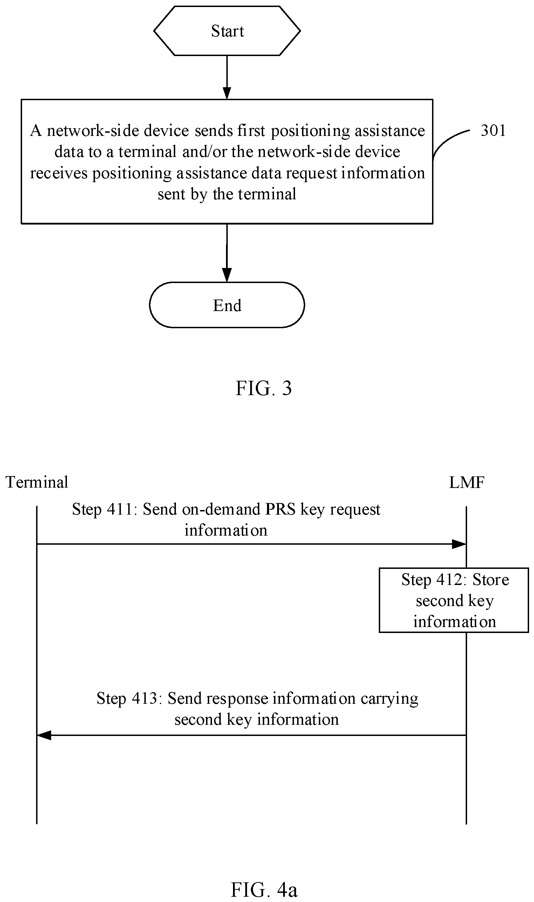

Refer to FIG. 3. FIG. 3 is a flowchart of a positioning method according to an embodiment of this application. As shown in FIG. 3, the positioning method provided in this embodiment of this application includes:
Step 301: A network-side device sends first positioning assistance data to a terminal, where the first positioning assistance data is used to indicate configuration information for an on-demand PRS; and/or the network-side device receives positioning assistance data request information sent by the terminal, where the positioning assistance data request information is used to indicate related request information for an on-demand PRS.

The terminal in this application may be understood as a terminal that has subscribed to an on-demand service, or may be understood as a terminal that supports an on-demand service; and can be further understood as a terminal requesting on-demand selection or a terminal performing on-demand PRS measurement. In the above, the first positioning assistance data may be sent by a network-side device, for example, a location management function (Location Management Function, LMF), an access and mobility management function (Access and Mobility Management Function, AMF), or a base station sends the first positioning assistance data sent to the terminal. The first positioning assistance data is used to indicate the configuration information for the on-demand PRS, for example, the first positioning assistance data includes at least one of the following:
first key information used for parsing the on-demand PRS;
at least one PRS configuration set used for on-demand selection;
resource information used for the on-demand PRS; and
response information used for the on-demand PRS.

In the above, the first key information is used by the terminal to parse the assistance information for the on-demand (on demand) PRS, and the at least one PRS configuration set may include identification information of the PRS configuration set.

In the above, the on-demand PRS may be understood as one or more pre-configured PRSs, or may be understood as a changeable PRS (that is, according to a protocol before R17, the PRS is installed by the network or configured by the base station itself, and the UE and LMF cannot affect its configuration), and the on-demand PRS may be configured on demand based on a request of the UE and the LMF.

In an embodiment, the PRS may be a positioning signal or a reference signal for positioning, and the positioning signal includes at least one of the following: DL PRS, channel-state information reference signal (channel-state information reference signals, CSI-RS), synchronization signal block (Synchronization Signal Block, SSB), tracking reference signal (tracking reference signal, TRS), and sounding reference signal.

The positioning assistance data request information carries at least one of the following:
on-demand positioning reference signal PRS request information; and
on-demand PRS key request information.

Specifically, the on-demand PRS key request information is used to obtain key information, so as to parse assistance information for the on-demand PRS by using the first key information.

In this embodiment, the network-side device sends the first positioning assistance data to the terminal, where the first positioning assistance data is used to indicate configuration information for an on-demand PRS; and/or the network-side device receives the positioning assistance data request information sent by the terminal, where the positioning assistance data request information is used to indicate related request information for an on-demand PRS. The network-side device can select the PRS on demand by sending the first positioning assistance data and/or receiving the positioning assistance data request information. Such manner of dynamically determining a PRS enables adjustment made according to an actual situation, thereby improving flexibility of determining the PRS, thereby improving effective utilization of PRSs.

The on-demand PRS may be selected by the network-side device or selected by the terminal.

The on-demand PRS key request information may be carried in the positioning assistance data request information and sent together with the on-demand PRS request information. In this case, the positioning assistance data request information carries the on-demand PRS key request information and the on-demand PRS request information, and the terminal may send the positioning assistance data request information to an LMF. The on-demand PRS key request information may also be sent separately from the on-demand PRS request information, that is, the on-demand PRS request information is carried in the positioning assistance data request information for transmission, and the on-demand PRS key request information is carried in a preset service request message, a preset registration request message, or an LPP message.

The resource information used for the on-demand PRS includes at least one of the following:
a time-domain resource used for an on-demand PRS by a network-side device;
a frequency-domain resource used for the on-demand PRS by the network-side device;
a bandwidth used for the on-demand PRS by the network-side device;
a duration used for the on-demand PRS by the network-side device;
a periodicity used for the on-demand PRS by the network-side device;
a time-domain offset used for the on-demand PRS by the network-side device;
a start time used for the on-demand PRS by the network-side device;
a symbol used for the on-demand PRS by the network-side device; and
a repetition count used for the on-demand PRS by the network-side device.

Specifically, the resource information used for the on-demand PRS includes at least one of the following:
a maximum number of positioning reference signal resources used for the on-demand PRS by a network-side device;
a maximum positioning reference signal resource sets used for the on-demand PRS by the network-side device;
a maximum number of TRPs used for the on-demand PRS by the network-side device;
a maximum bandwidth used for the on-demand PRS by the network-side device;
a maximum duration used for the on-demand PRS by the network-side device;
a minimum periodicity used for the on-demand PRS by the network-side device;
a maximum periodicity used for the on-demand PRS by the network-side device;
an earliest time-domain offset used for the on-demand PRS by the network-side device;
an earliest start time used for the on-demand PRS by the network-side device;
a maximum number of symbols used for the on-demand PRS by the network-side device; and
a maximum repetition count used for the on-demand PRS by the network-side device.

The response information used for the on-demand PRS includes at least one of the following:
error indication information;
error type information;
information of no available resource;
error cause information;
acknowledgment ACK information;
negative acknowledgment NACK information;
information of not supporting on-demand PRS;
identification information of a target PRS configuration set, where the at least one PRS configuration set includes the target PRS configuration set;
request success indication information or request failure indication information;
configuration success indication information or configuration failure indication information; and
configuration information for the target PRS configuration set.

The at least one PRS configuration set includes a target PRS configuration set. The positioning assistance data request information carries on-demand PRS request information.

The on-demand PRS request information includes at least one of the following:
identification information of the target PRS configuration set;
location information of the terminal; and
configuration parameter.

The configuration parameter includes at least one of the following:
bandwidth information for a PRS corresponding to the identification information of the target PRS configuration set;
a start time for sending the PRS corresponding to the identification information of the target PRS configuration set;
an end time for sending the PRS corresponding to the identification information of the target PRS configuration set;
a duration for sending the PRS corresponding to the identification information of the target PRS configuration set;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

The on-demand PRS request information includes at least one of the following:
indication information for indicating an on-demand PRS;
assistance information for the on-demand PRS;
location information of the terminal;
expected angle of departure information;
measurement information for a synchronization signal block SSB measured by the terminal; and
measurement information for a channel state information reference signal CSI-RS measured by the terminal.

Optionally, the positioning method further includes:
sending, by the network-side device, second positioning assistance data, where the second positioning assistance data includes at least one of the following:
configuration information for a target PRS, where the target PRS is a PRS selected on demand; and
activation information for the target PRS.

The target PRS may be selected or configured by the network-side device, and the target PRS is a PRS in the target PRS configuration set. It should be noted that the target PRS is at least one PRS or at least one group of PRSs (in this case, the target PRS includes multiple PRSs). If at least two PRS configurations or at least two groups of PRS configurations are configured in the configuration information for the target PRS, the terminal may also need the activation information for the target PRS to activate the configured PRS. In this case, the second positioning assistance data may include the configuration information for the target PRS and the activation information for the target PRS, or the configuration information for the target PRS and the activation information for the target PRS are transmitted in different information elements. If the second positioning assistance data includes only the configuration information for the target PRS, the terminal needs to additionally obtain the activation information for the target PRS. If only one PRS configuration or a group of PRS configurations are configured in the configuration information for the target PRS, the terminal does not need to activate the configured PRS.

The target PRS satisfies at least one of the following:
a resource of the target PRS does not conflict with a resource of a first PRS in a same cell, where the first PRS is another PRS in the same cell as the target PRS;
a resource of the target PRS in a first serving cell does not conflict with PRS resources of the first serving cell;
a resource of the target PRS in the first serving cell does not conflict with PRS resources of a second serving cell, where the first serving cell and the second serving cell are different serving cells;
a resource of the target PRS in a non-serving cell does not conflict with PRS resources of a serving cell;
a resource of the target PRS in a first non-serving cell does not conflict with PRS resources of the first non-serving cell; and
a resource of the target PRS in the first non-serving cell does not conflict with PRS resources of a second non-serving cell, where the first non-serving cell and the second non-serving cell are different non-serving cells.

In the above, a second PRS is a PRS other than the target PRS, and in a case that a resource of the target PRS conflicts with a resource of the second PRS, the method further includes one of the following:
sending, by the network-side device, the target PRS or the second PRS based on a priority of the target PRS and a priority of the second PRS;
expecting, by the network-side device, to cancel sending of the second PRS;
sending, by the network-side device, the target PRS and the second PRS; and
sending, by the network-side device, indication information for indicating whether the second PRS is sent.

Optionally, the positioning method further includes:
sending, by the network-side device, second key information, where the second key information is used for parsing assistance information for a target PRS, and the target PRS is a PRS selected on demand. The target PRS may be selected by the network-side device, and the target PRS may be a PRS in the target PRS configuration set.

The second key information may be carried in the positioning assistance data sent by the network-side device, for example, the first positioning assistance data or positioning assistance data received at other times, or the second key information may be carried in a response message from the network-side device for the on-demand PRS key request information sent by the terminal. The second key information may be further carried in broadcast information.

The second key information includes validity information, and the validity information includes at least one of the following:
time information, such as duration information, validity start time information, or validity end time information;
region information, for example, being valid in a specific region, such as a cell range, a TAG range, an expected angle range, a PRS resource coverage range, beam identification information for sending a positioning reference signal, or beam direction information for sending the positioning reference signal;
event information, where, for example, the key is expired when an event occurred; and
spatial relation information, for example, being validity under a specific spatial relation.

The second key information includes key information of at least one key.

The at least one key includes at least one of the following:
static key;
dynamic key;
on-demand key; and
at least two levels of keys, for example, a primary key and a secondary key.
in addition to key information of at least one key, the second key information may further include at least one of the following:
   validity identification information;
   group identification information;
   scrambling code identification information;
   usable broadcast type information;
   cell identification information;
   TRP identification information;
   beam identification information for sending a positioning reference signal;
   beam direction information for sending the positioning reference signal;
   identification information of the positioning reference signal; and
   spatial relation identification information.

The second key information may be sent by an LMF to the terminal (in a unicast manner), or the second key information may be sent by the LMF to the base station, and then the base station sends the second key information in a broadcast manner.

FIG. 4a is a schematic flowchart of a procedure of obtaining key information (that is, second key information) according to an embodiment of this application. As shown in FIG. 4a, after receiving the on-demand PRS key request information sent by the terminal, the LMF obtains and stores encryption key information, and then sends the encryption key information to the terminal.

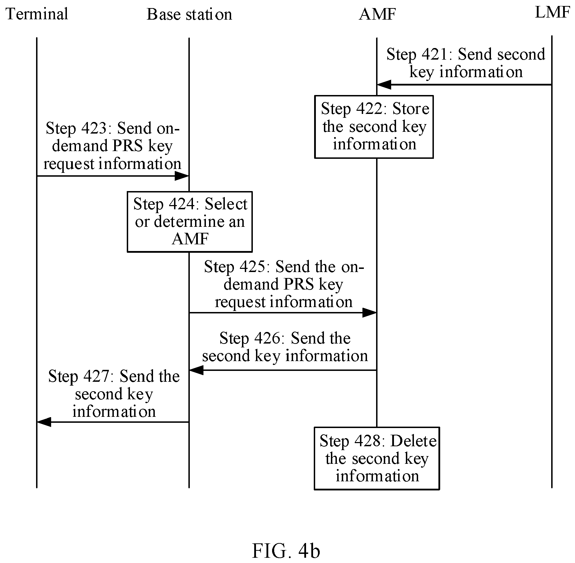

FIG. 4b shows another schematic flowchart of a procedure of obtaining key information (that is, second key information) according to an embodiment of this application. As shown in FIG. 4b, the encryption key information is sent by the base station to the terminal in a broadcast manner.

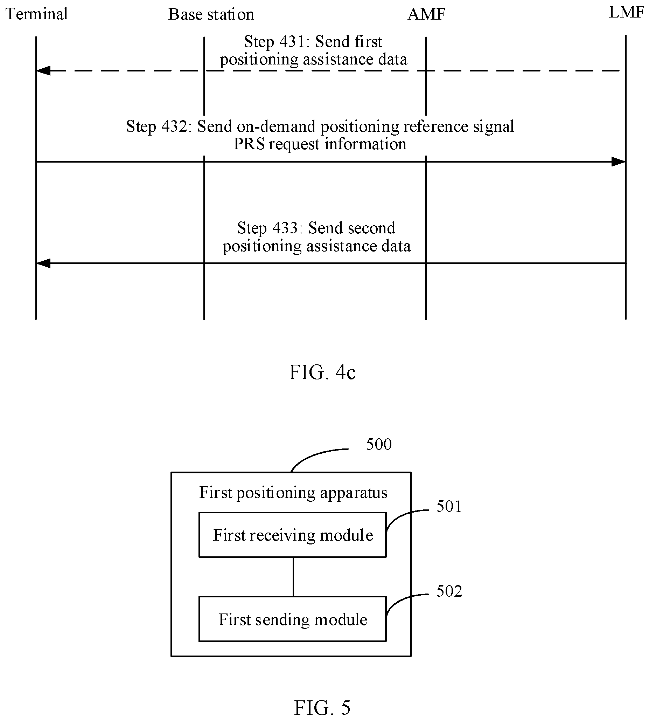

FIG. 4c is a schematic flowchart of a positioning method according to an embodiment of this application. As shown in FIG. 4c, step 431 may be performed before step 432, or step 431 may not be performed before step 432.

It should be noted that, for the positioning method provided by the embodiments of this application, the execution body may be a positioning apparatus, or a control module for executing the positioning method in the positioning apparatus.

In the following embodiments, the positioning method being performed by the positioning apparatus is used as an example to describe the positioning apparatus provided in the embodiments of this application.

Refer to FIG. 5. FIG. 5 is a structural diagram of a positioning apparatus according to an embodiment of this application. The first positioning apparatus 500 includes:
a first receiving module 501, configured to receive first positioning assistance data, where the first positioning assistance data is used to indicate configuration information for an on-demand PRS;
   and/or,
a first sending module 502, configured to send positioning assistance data request information, where the positioning assistance data request information is used to indicate related request information for an on-demand PRS.

Optionally, the first positioning assistance data includes at least one of the following:
first key information used for parsing the on-demand PRS;
at least one PRS configuration set used for on-demand selection;
resource information used for the on-demand PRS; and
response information used for the on-demand PRS.

Optionally, the resource information used for the on-demand PRS includes at least one of the following:
a time-domain resource used for an on-demand PRS by a network-side device;
a frequency-domain resource used for the on-demand PRS by the network-side device;
a bandwidth used for the on-demand PRS by the network-side device;
a duration used for the on-demand PRS by the network-side device;
a periodicity used for the on-demand PRS by the network-side device;
a time-domain offset used for the on-demand PRS by the network-side device;
a start time used for the on-demand PRS by the network-side device;
a symbol used for the on-demand PRS by the network-side device; and
a repetition count used for the on-demand PRS by the network-side device.

Optionally, the resource information used for the on-demand PRS includes at least one of the following:
a maximum number of positioning reference signal resources used for the on-demand PRS by a network-side device;
a maximum positioning reference signal resource sets used for the on-demand PRS by the network-side device;
a maximum number of TRPs used for the on-demand PRS by the network-side device;
a maximum bandwidth used for the on-demand PRS by the network-side device;
a maximum duration used for the on-demand PRS by the network-side device;
a minimum periodicity used for the on-demand PRS by the network-side device;
a maximum periodicity used for the on-demand PRS by the network-side device;
an earliest time-domain offset used for the on-demand PRS by the network-side device;
an earliest start time used for the on-demand PRS by the network-side device;
a maximum number of symbols used for the on-demand PRS by the network-side device; and
a maximum repetition count used for the on-demand PRS by the network-side device.

Optionally, the response information used for the on-demand PRS includes at least one of the following:
error indication information;
error type information;
information of no available resource;
error cause information;
acknowledgment ACK information;
negative acknowledgment NACK information;
information of not supporting on-demand PRS;
identification information of a target PRS configuration set, where the at least one PRS configuration set includes the target PRS configuration set;
request success indication information or request failure indication information;
configuration success indication information or configuration failure indication information; and
configuration information for the target PRS configuration set.

Optionally, the positioning assistance data request information carries at least one of the following:
on-demand positioning reference signal PRS request information; and
on-demand PRS key request information.

Optionally, the apparatus further includes a second sending module, configured to:
send on-demand PRS key request information, where the on-demand PRS key request information is carried in a preset service request message, a preset registration request message, or a long term evolution positioning protocol message.

Optionally, in a case that the terminal is in a connected state, the preset service request message is a service request message carrying no protocol data unit PDU;
or,
   in a case that the terminal is in a connected state, the preset service request message is a service request message carrying the on-demand PRS key request information;
or,
   in a case that the terminal is in a non-connected state, the preset service request message is sent through a signaling radio bearer SRB2 or a data radio bearer DRB .

Optionally, sending of the on-demand PRS key request information is triggered based on at least one of the following:
first preset quality of service QoS condition;
measurement quality of positioning signal measurement for the terminal being less than a first threshold;
positioning quality of location information for positioning of the terminal being less than a second threshold;
location information for positioning of the terminal being not satisfying a second preset QoS condition;
on-demand PRS measurement request information or the first positioning assistance data being received by the terminal, where the on-demand PRS measurement request information is used to indicate to perform measurement on the on-demand PRS;
a measurement result of positioning signal measurement for the terminal being less than or greater than a third threshold; and
an on-demand PRS service being subscribed by the terminal.

Optionally, the at least one PRS configuration set includes a target PRS configuration set.

Optionally, the positioning assistance data request information carries on-demand PRS request information.

The on-demand PRS request information includes at least one of the following:
identification information of the target PRS configuration set;
location information of the terminal; and
configuration parameter.

Optionally, the positioning assistance data request information is sent in a case that the target PRS configuration set satisfies a first condition.

The first condition includes at least one of the following:
that at least one configuration parameter in the target PRS configuration set includes multiple optional values;
that at least one configuration parameter in the target PRS configuration set does not satisfy a preset requirement of the terminal;
that at least one configuration parameter in the target PRS configuration set is a default configuration parameter;
that at least one configuration parameter in the target PRS configuration set includes maximum configurable range information; and
that at least one configuration parameter in the target PRS configuration set includes a maximum value of selectable values of the configuration parameter.

Optionally, the configuration parameter includes at least one of the following:
bandwidth information for a PRS corresponding to the identification information of the target PRS configuration set;
a start time for sending the PRS corresponding to the identification information of the target PRS configuration set;
an end time for sending the PRS corresponding to the identification information of the target PRS configuration set;
a duration for sending the PRS corresponding to the identification information of the target PRS configuration set;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

Optionally, the on-demand PRS request information includes at least one of the following:
indication information for indicating an on-demand PRS;
assistance information for the on-demand PRS;
location information of the terminal;
expected angle of departure information;
measurement information for a synchronization signal block SSB measured by the terminal; and
measurement information for a CSI-RS measured by the terminal.

Optionally, the apparatus further includes a second receiving module, configured to:
receive second positioning assistance data, where the second positioning assistance data includes at least one of the following:
configuration information for a target PRS, where the target PRS is a PRS selected on demand; and
activation information for the target PRS.

Optionally, the target PRS satisfies at least one of the following:
a resource of the target PRS does not conflict with a resource of a first PRS in a same cell, where the first PRS is another PRS in the same cell as the target PRS;
a resource of the target PRS in a first serving cell does not conflict with PRS resources of the first serving cell;
a resource of the target PRS in the first serving cell does not conflict with PRS resources of a second serving cell, where the first serving cell and the second serving cell are different serving cells;
a resource of the target PRS in a non-serving cell does not conflict with PRS resources of a serving cell;
a resource of the target PRS in a first non-serving cell does not conflict with PRS resources of the first non-serving cell; and
a resource of the target PRS in the first non-serving cell does not conflict with PRS resources of a second non-serving cell, where the first non-serving cell and the second non-serving cell are different non-serving cells.

Optionally, a second PRS is a PRS other than the target PRS, and in a case that a resource of the target PRS conflicts with a resource of the second PRS, the apparatus further includes:
a third receiving module, configured to receive the target PRS or the second PRS based on a priority of the target PRS and a priority of the second PRS;
a setting module, configured to expect to cancel sending of the second PRS;
a fourth receiving module, configured to receive the target PRS and the second PRS; or
a fifth receiving module, configured to receive indication information for indicating whether the second PRS is sent.

Optionally, the apparatus further includes a sixth receiving module, configured to:
receive second key information, where the second key information is used for parsing assistance information for a target PRS, where the target PRS is a PRS selected on demand.

Optionally, the second key information includes validity information, and the validity information includes at least one of the following:
time information;
region information;
event information; and
spatial relation information.

Optionally, the second key information includes key information of at least one key.
the at least one key includes at least one of the following:
static key;
dynamic key;
on-demand key; and
at least two levels of keys.

Optionally, the second key information further includes at least one of the following:
validity identification information;
group identification information;
scrambling code identification information;
usable broadcast type information;
cell identification information;
TRP identification information;
beam identification information for sending a positioning reference signal;
beam direction information for sending the positioning reference signal;
identification information of the positioning reference signal; and
spatial relation identification information.

The first positioning apparatus 500 in this embodiment of this application may be an apparatus, or may be a component, an integrated circuit, or a chip in a terminal.

The first positioning apparatus 500 in this embodiment of this application may be an apparatus with an operating system. The operating system may be an Android (Android) operating system, an iOS operating system, or other possible operating systems, and is not specifically limited in the embodiments of this application.

The first positioning apparatus 500 provided in this embodiment of this application is capable of implementing the processes implemented in the method embodiments in FIG. 2, with the same technical effects achieved. To avoid repetition, details are not described herein again.

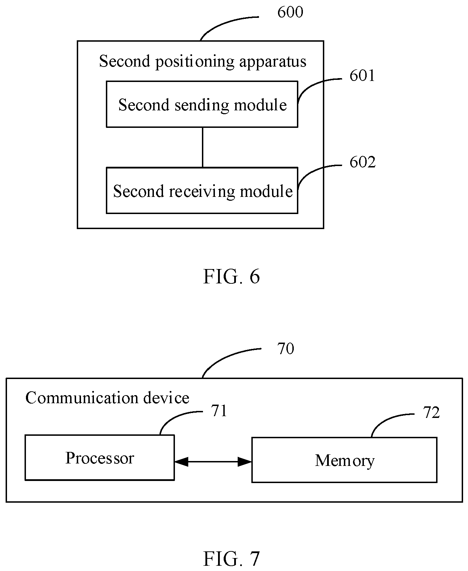

Refer to FIG. 6. FIG. 6 is a structural diagram of a positioning apparatus according to an embodiment of this application. The second positioning apparatus 600 includes:
a second sending module 601, configured to send first positioning assistance data to a terminal, where the first positioning assistance data is used to indicate configuration information for an on-demand PRS;
   and/or,
a second receiving module 602, configured to receive positioning assistance data request information sent by the terminal, where the positioning assistance data request information is used to indicate related request information for an on-demand PRS.

Optionally, the first positioning assistance data includes at least one of the following:
first key information used for parsing the on-demand PRS;
at least one PRS configuration set used for on-demand selection;
resource information used for the on-demand PRS; and
response information used for the on-demand PRS.

Optionally, the resource information used for the on-demand PRS includes at least one of the following:
a time-domain resource used for an on-demand PRS by a network-side device;
a frequency-domain resource used for the on-demand PRS by the network-side device;
a bandwidth used for the on-demand PRS by the network-side device;
a duration used for the on-demand PRS by the network-side device;
a periodicity used for the on-demand PRS by the network-side device;
a time-domain offset used for the on-demand PRS by the network-side device;
a start time used for the on-demand PRS by the network-side device;
a symbol used for the on-demand PRS by the network-side device; and
a repetition count used for the on-demand PRS by the network-side device.

Optionally, the resource information used for the on-demand PRS includes at least one of the following:
a maximum number of positioning reference signal resources used for the on-demand PRS by a network-side device;
a maximum positioning reference signal resource sets used for the on-demand PRS by the network-side device;
a maximum number of TRPs used for the on-demand PRS by the network-side device;
a maximum bandwidth used for the on-demand PRS by the network-side device;
a maximum duration used for the on-demand PRS by the network-side device;
a minimum periodicity used for the on-demand PRS by the network-side device;
a maximum periodicity used for the on-demand PRS by the network-side device;
an earliest time-domain offset used for the on-demand PRS by the network-side device;
an earliest start time used for the on-demand PRS by the network-side device;
a maximum number of symbols used for the on-demand PRS by the network-side device; and
a maximum repetition count used for the on-demand PRS by the network-side device.

Optionally, the response information used for the on-demand PRS includes at least one of the following:
error indication information;
error type information;
information of no available resource;
error cause information;
acknowledgment ACK information;
negative acknowledgment NACK information;
information of not supporting on-demand PRS;
identification information of a target PRS configuration set, where the at least one PRS configuration set includes the target PRS configuration set;
request success indication information or request failure indication information;
configuration success indication information or configuration failure indication information; and
configuration information for the target PRS configuration set.

Optionally, the positioning assistance data request information carries at least one of the following:
on-demand positioning reference signal PRS request information; and
on-demand PRS key request information.

Optionally, the apparatus further includes a third receiving module, configured to:
receive on-demand PRS key request information, where the on-demand PRS key request information is carried in a preset service request message, a preset registration request message, or a long term evolution positioning protocol message.

Optionally, the at least one PRS configuration set includes a target PRS configuration set.

Optionally, the positioning assistance data request information carries on-demand PRS request information.

The on-demand PRS request information includes at least one of the following:
identification information of the target PRS configuration set;
location information of the terminal; and
configuration parameter.

Optionally, the configuration parameter includes at least one of the following:
bandwidth information for a PRS corresponding to the identification information of the target PRS configuration set;
a start time for sending the PRS corresponding to the identification information of the target PRS configuration set;
an end time for sending the PRS corresponding to the identification information of the target PRS configuration set;
a duration for sending the PRS corresponding to the identification information of the target PRS configuration set;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

Optionally, the on-demand PRS request information includes at least one of the following:
indication information for indicating an on-demand PRS;
assistance information for the on-demand PRS;
location information of the terminal;
expected angle of departure information;
measurement information for a synchronization signal block SSB measured by the terminal; and
measurement information for a CSI-RS measured by the terminal.

Optionally, the apparatus further includes a third sending module, configured to:
send second positioning assistance data, where the second positioning assistance data includes at least one of the following:
configuration information for a target PRS, where the target PRS is a PRS selected on demand; and
activation information for the target PRS.

Optionally, the target PRS satisfies at least one of the following:
a resource of the target PRS does not conflict with a resource of a first PRS in a same cell, where the first PRS is another PRS in the same cell as the target PRS;
a resource of the target PRS in a first serving cell does not conflict with PRS resources of the first serving cell;
a resource of the target PRS in the first serving cell does not conflict with PRS resources of a second serving cell, where the first serving cell and the second serving cell are different serving cells;
a resource of the target PRS in a non-serving cell does not conflict with PRS resources of a serving cell;
a resource of the target PRS in a first non-serving cell does not conflict with PRS resources of the first non-serving cell; and
a resource of the target PRS in the first non-serving cell does not conflict with PRS resources of a second non-serving cell, where the first non-serving cell and the second non-serving cell are different non-serving cells.

Optionally, a second PRS is a PRS other than the target PRS, and in a case that a resource of the target PRS conflicts with a resource of the second PRS, the method further includes one of the following:
sending, by the network-side device, the target PRS or the second PRS based on a priority of the target PRS and a priority of the second PRS;
expecting, by the network-side device, to cancel sending of the second PRS;
sending, by the network-side device, the target PRS and the second PRS; and
sending, by the network-side device, indication information for indicating whether the second PRS is sent.

Optionally, the apparatus further includes a fourth sending module, configured to:
sending second key information, where the second key information is used for parsing assistance information for a target PRS, where the target PRS is a PRS selected on demand.

Optionally, the second key information includes validity information, and the validity information includes at least one of the following:
time information;
region information;
event information; and
spatial relation information.

Optionally, the second key information includes key information of at least one key.
the at least one key includes at least one of the following:
static key;
dynamic key;
on-demand key; and
at least two levels of keys.

Optionally, the second key information further includes at least one of the following:
validity identification information;
group identification information;
scrambling code identification information;
usable broadcast type information;
cell identification information;
TRP identification information;
beam identification information for sending a positioning reference signal;
beam direction information for sending the positioning reference signal;
identification information of the positioning reference signal; and
spatial relation identification information.

The second positioning apparatus 600 provided in this embodiment of this application is capable of implementing the processes implemented in the method embodiments in FIG. 3, with the same technical effects achieved. To avoid repetition, details are not described herein again.

Optionally, as shown in FIG. 7, an embodiment of this application further provides a communication device 70, including a processor 71, a memory 72, and a program or instructions stored in the memory 72 and capable of running on the processor 71. For example, when the communication device 70 is a terminal and when the program or the instructions are executed by the processor 71, the processes of the foregoing embodiment of the positioning method shown in FIG. 2 are implemented, with the same technical effects achieved. When the communication device 70 is a network-side device and when the program or the instructions are executed by the processor 71, the processes of the foregoing embodiment of the positioning method shown in FIG. 3 are implemented, with the same technical effects achieved.

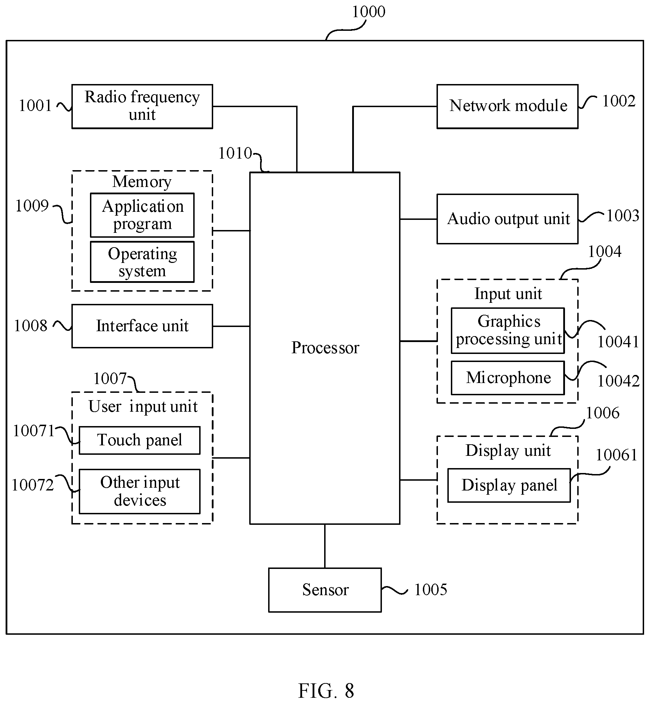

FIG. 8 is a schematic diagram of a hardware structure of a terminal for implementing the embodiments of this application.

The terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 8 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 may include a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, the radio frequency unit 1001 receives downlink data from a network-side device, and then sends the downlink data to the processor 1010 for processing; and also sends uplink data to the base station. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may include a program or instruction storage area and a data storage area. The program or instruction storage area may store an operating system, an application program or instruction required by at least one function (for example, a sound playback function or an image playback function), and the like. In addition, the memory 1009 may include a high-speed random access memory, and may further include a non-volatile memory. The non-volatile memory may be a read-only memory (Read-Only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 1010 may include one or more processing units. Optionally, an application processor and a modem processor may be integrated in the processor 1010. The application processor primarily processes an operating system, user interfaces, application programs or instructions, and the like. The modem processor primarily processes radio communication, for example, being a baseband processor. It can be understood that the modem processor may alternatively be not integrated in the processor 1010.

The radio frequency unit 1001 is configured to receive first positioning assistance data, where the first positioning assistance data is used to indicate configuration information for an on-demand PRS;
and/or,
send positioning assistance data request information, where the positioning assistance data request information is used to indicate related request information for an on-demand PRS.

Optionally, the first positioning assistance data includes at least one of the following:
first key information used for parsing the on-demand PRS;
at least one PRS configuration set used for on-demand selection;
resource information used for the on-demand PRS; and
response information used for the on-demand PRS.

Optionally, the resource information used for the on-demand PRS includes at least one of the following:
a time-domain resource used for an on-demand PRS by a network-side device;
a frequency-domain resource used for the on-demand PRS by the network-side device;
a bandwidth used for the on-demand PRS by the network-side device;
a duration used for the on-demand PRS by the network-side device;
a periodicity used for the on-demand PRS by the network-side device;
a time-domain offset used for the on-demand PRS by the network-side device;
a start time used for the on-demand PRS by the network-side device;
a symbol used for the on-demand PRS by the network-side device; and
a repetition count used for the on-demand PRS by the network-side device.

Optionally, the resource information used for the on-demand PRS includes at least one of the following:
a maximum number of positioning reference signal resources used for the on-demand PRS by a network-side device;
a maximum positioning reference signal resource sets used for the on-demand PRS by the network-side device;
a maximum number of TRPs used for the on-demand PRS by the network-side device;
a maximum bandwidth used for the on-demand PRS by the network-side device;
a maximum duration used for the on-demand PRS by the network-side device;
a minimum periodicity used for the on-demand PRS by the network-side device;
a maximum periodicity used for the on-demand PRS by the network-side device;
an earliest time-domain offset used for the on-demand PRS by the network-side device;
an earliest start time used for the on-demand PRS by the network-side device;
a maximum number of symbols used for the on-demand PRS by the network-side device; and
a maximum repetition count used for the on-demand PRS by the network-side device.

Optionally, the response information used for the on-demand PRS includes at least one of the following:
error indication information;
error type information;
information of no available resource;
error cause information;
acknowledgment ACK information;
negative acknowledgment NACK information;
information of not supporting on-demand PRS;
identification information of a target PRS configuration set, where the at least one PRS configuration set includes the target PRS configuration set;
request success indication information or request failure indication information;
configuration success indication information or configuration failure indication information; and
configuration information for the target PRS configuration set.

Optionally, the positioning assistance data request information carries at least one of the following:
on-demand positioning reference signal PRS request information; and
on-demand PRS key request information.

Optionally, the radio frequency unit 1001 is further configured to:
send on-demand PRS key request information, where the on-demand PRS key request information is carried in a preset service request message, a preset registration request message, or a long term evolution positioning protocol message.

Optionally, in a case that the terminal is in a connected state, the preset service request message is a service request message carrying no protocol data unit PDU;
or,
   in a case that the terminal is in a connected state, the preset service request message is a service request message carrying the on-demand PRS key request information;
or,
   in a case that the terminal is in a non-connected state, the preset service request message is sent through a signaling radio bearer SRB2 or a data radio bearer DRB .

Optionally, sending of the on-demand PRS key request information is triggered based on at least one of the following:
first preset quality of service QoS condition;
measurement quality of positioning signal measurement for the terminal being less than a first threshold;
positioning quality of location information for positioning of the terminal being less than a second threshold;
location information for positioning of the terminal being not satisfying a second preset QoS condition;
on-demand PRS measurement request information or the first positioning assistance data being received by the terminal, where the on-demand PRS measurement request information is used to indicate to perform measurement on the on-demand PRS;
a measurement result of positioning signal measurement for the terminal being less than or greater than a third threshold; and
an on-demand PRS service being subscribed by the terminal.

Optionally, the at least one PRS configuration set includes a target PRS configuration set.

Optionally, the positioning assistance data request information carries on-demand PRS request information.

The on-demand PRS request information includes at least one of the following:
identification information of the target PRS configuration set;
location information of the terminal; and
configuration parameter.

Optionally, the positioning assistance data request information is sent in a case that the target PRS configuration set satisfies a first condition.

The first condition includes at least one of the following:
that at least one configuration parameter in the target PRS configuration set includes multiple optional values;
that at least one configuration parameter in the target PRS configuration set does not satisfy a preset requirement of the terminal;
that at least one configuration parameter in the target PRS configuration set is a default configuration parameter;
that at least one configuration parameter in the target PRS configuration set includes maximum configurable range information; and
that at least one configuration parameter in the target PRS configuration set includes a maximum value of selectable values of the configuration parameter.

Optionally, the configuration parameter includes at least one of the following:
bandwidth information for a PRS corresponding to the identification information of the target PRS configuration set;
a start time for sending the PRS corresponding to the identification information of the target PRS configuration set;
an end time for sending the PRS corresponding to the identification information of the target PRS configuration set;
a duration for sending the PRS corresponding to the identification information of the target PRS configuration set;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

Optionally, the on-demand PRS request information includes at least one of the following:
indication information for indicating an on-demand PRS;
assistance information for the on-demand PRS;
location information of the terminal;
expected angle of departure information;
measurement information for a synchronization signal block SSB measured by the terminal; and
measurement information for a CSI-RS measured by the terminal.

Optionally, the radio frequency unit 1001 is further configured to receive second positioning assistance data, where the second positioning assistance data includes at least one of the following:
configuration information for a target PRS, where the target PRS is a PRS selected on demand; and
activation information for the target PRS.

Optionally, the target PRS satisfies at least one of the following:
a resource of the target PRS does not conflict with a resource of a first PRS in a same cell, where the first PRS is another PRS in the same cell as the target PRS;
a resource of the target PRS in a first serving cell does not conflict with PRS resources of the first serving cell;
a resource of the target PRS in the first serving cell does not conflict with PRS resources of a second serving cell, where the first serving cell and the second serving cell are different serving cells;
a resource of the target PRS in a non-serving cell does not conflict with PRS resources of a serving cell;
a resource of the target PRS in a first non-serving cell does not conflict with PRS resources of the first non-serving cell; and
a resource of the target PRS in the first non-serving cell does not conflict with PRS resources of a second non-serving cell, where the first non-serving cell and the second non-serving cell are different non-serving cells.

Optionally, a second PRS is a PRS other than the target PRS, and in a case that a resource of the target PRS conflicts with a resource of the second PRS, the method further includes one of the following:
receiving, by the terminal, the target PRS or the second PRS based on a priority of the target PRS and a priority of the second PRS;
expecting, by the terminal, to cancel sending of the second PRS;
receiving, by the terminal, the target PRS and the second PRS; and
receiving, by the terminal, indication information for indicating whether the second PRS is sent.

Optionally, the radio frequency unit 1001 is further configured to receive second key information, where the second key information is used for parsing assistance information for a target PRS, where the target PRS is a PRS selected on demand.

Optionally, the second key information includes validity information, and the validity information includes at least one of the following:
time information;
region information;
event information; and
spatial relation information.

Optionally, the second key information includes key information of at least one key.

The at least one key includes at least one of the following:
static key;
dynamic key;
on-demand key; and
at least two levels of keys.

Optionally, the second key information further includes at least one of the following:
validity identification information;
group identification information;
scrambling code identification information;
usable broadcast type information;
cell identification information;
TRP identification information;
beam identification information for sending a positioning reference signal;
beam direction information for sending the positioning reference signal;
identification information of the positioning reference signal; and
spatial relation identification information.

The terminal 1000 provided in the foregoing embodiment is capable of implementing the processes implemented in the method embodiment shown in FIG. 2, with the same technical effects achieved. To avoid repetition, details are not described herein again.

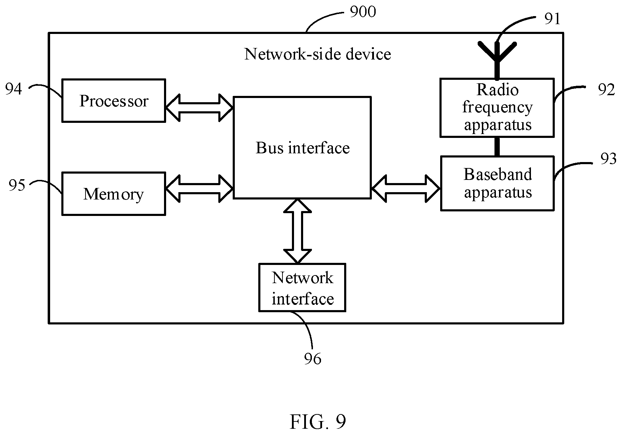

Specifically, an embodiment of this application further provides a network-side device. As shown in FIG. 9, the network device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The frequency band processing apparatus may be located in the baseband apparatus 93. The method performed by the network-side device in the foregoing embodiments may be implemented in the baseband apparatus 93, and the baseband apparatus 93 includes a processor 94 and a memory 95.

The baseband apparatus 93 may include, for example, at least one baseband board, where a plurality of chips are disposed on the baseband board. As shown in FIG. 9, one of the chips is, for example, the processor 94, connected to the memory 95, to invoke a program in the memory 95 to perform the operation of the network device shown in the foregoing method embodiment.

The baseband apparatus 93 may further include a network interface 96, configured to exchange information with the radio frequency apparatus 92, where the interface is, for example, a common public radio interface (common public radio interface, CPRI for short).

Specifically, the network-side device in this embodiment of the present invention further includes: instructions or a program stored in the memory 95 and capable of running on the processor 94. The processor 94 invokes the instructions or program in the memory 95 to execute the method executed by the modules shown in FIG. 7, with the same technical effects achieved. To avoid repetition, details are not repeated herein.

An embodiment of this application further provides a readable storage medium, where a program or an instruction is stored in the readable storage medium. When the program or the instruction is executed by a processor, the processes of the foregoing method embodiments shown in FIG. 2 or FIG. 3 are implemented, with the same technical effects achieved. To avoid repetition, details are not described herein again.

The processor is a processor in the terminal or the network-side device described in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communications interface. The communications interface is coupled to the processor, and the processor is configured to run a program or instructions of a network device to implement the processes of the foregoing method embodiments shown in FIG. 2 or FIG. 3, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program product, where the computer program product is stored in a readable storage medium, and when being executed by at least one processor, the computer program product is configured to implement the processes of the foregoing method embodiments shown in FIG. 2 or FIG. 3, with the same technical effects achieved. To avoid repetition, details are not repeated herein.

It should be noted that in this specification, the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of the present invention essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network, or the like) to perform the methods described in the embodiments of this disclosure.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

## Claims

1. A positioning method, comprising:
receiving, by a terminal, first positioning assistance data, wherein the first positioning assistance data is used to indicate configuration information for an on-demand positioning reference signal PRS;
and/or,
sending, by the terminal, positioning assistance data request information, wherein the positioning assistance data request information is used to indicate related request information for an on-demand PRS.

2. The method according to claim 1, wherein the first positioning assistance data comprises at least one of the following:
first key information used for parsing the on-demand PRS;
at least one PRS configuration set used for on-demand selection;
resource information used for the on-demand PRS; and
response information used for the on-demand PRS.

3. The method according to claim 2, wherein the resource information used for the on-demand PRS comprises at least one of the following:
a time-domain resource used for an on-demand PRS by a network-side device;
a frequency-domain resource used for the on-demand PRS by the network-side device;
a bandwidth used for the on-demand PRS by the network-side device;
a duration used for the on-demand PRS by the network-side device;
a periodicity used for the on-demand PRS by the network-side device;
a time-domain offset used for the on-demand PRS by the network-side device;
a start time used for the on-demand PRS by the network-side device;
a symbol used for the on-demand PRS by the network-side device; and
a repetition count used for the on-demand PRS by the network-side device.

4. The method according to claim 2, wherein the resource information used for the on-demand PRS comprises at least one of the following:
a maximum number of positioning reference signal resources used for the on-demand PRS by a network-side device;
a maximum positioning reference signal resource sets used for the on-demand PRS by the network-side device;
a maximum number of TRPs used for the on-demand PRS by the network-side device;
a maximum bandwidth used for the on-demand PRS by the network-side device;
a maximum duration used for the on-demand PRS by the network-side device;
a minimum periodicity used for the on-demand PRS by the network-side device;
a maximum periodicity used for the on-demand PRS by the network-side device;
an earliest time-domain offset used for the on-demand PRS by the network-side device;
an earliest start time used for the on-demand PRS by the network-side device;
a maximum number of symbols used for the on-demand PRS by the network-side device; and
a maximum repetition count used for the on-demand PRS by the network-side device.

5. The method according to claim 2, wherein the response information used for the on-demand PRS comprises at least one of the following:
error indication information;
error type information;
information of no available resource;
error cause information;
acknowledgment ACK information;
negative acknowledgment NACK information;
information of not supporting on-demand PRS;
identification information of a target PRS configuration set, wherein the at least one PRS configuration set comprises the target PRS configuration set;
request success indication information or request failure indication information;
configuration success indication information or configuration failure indication information; and
configuration information for the target PRS configuration set.

6. The method according to claim 1, wherein the positioning assistance data request information carries at least one of the following:
on-demand positioning reference signal PRS request information; and
on-demand PRS key request information.

7. The method according to claim 1, wherein the method further comprises:
sending, by the terminal, on-demand PRS key request information, wherein the on-demand PRS key request information is carried in a preset service request message, a preset registration request message, or a long term evolution positioning protocol message.

8. The method according to claim 7, wherein in a case that the terminal is in a connected state, the preset service request message is a service request message carrying no protocol data unit PDU;
or,
in a case that the terminal is in a connected state, the preset service request message is a service request message carrying the on-demand PRS key request information;
or,
in a case that the terminal is in a non-connected state, the preset service request message is sent through a signaling radio bearer SRB2 or a data radio bearer DRB.

9. The method according to claim 6, wherein sending of the on-demand PRS key request information is triggered based on at least one of the following:
first preset quality of service QoS condition;
measurement quality of positioning signal measurement for the terminal being less than a first threshold;
positioning quality of location information for positioning of the terminal being less than a second threshold;
location information for positioning of the terminal being not satisfying a second preset QoS condition;
on-demand PRS measurement request information or the first positioning assistance data being received by the terminal, wherein the on-demand PRS measurement request information is used to indicate to perform measurement on the on-demand PRS;
a measurement result of positioning signal measurement for the terminal being less than or greater than a third threshold; and
an on-demand PRS service being subscribed by the terminal.

10. The method according to claim 2, wherein the at least one PRS configuration set comprises a target PRS configuration set.

11. The method according to claim 10, wherein the positioning assistance data request information carries on-demand PRS request information; and
the on-demand PRS request information comprises at least one of the following:
identification information of the target PRS configuration set;
location information of the terminal; and
configuration parameter.

12. The method according to claim 10, wherein the positioning assistance data request information is sent in a case that the target PRS configuration set satisfies a first condition; wherein
the first condition comprises at least one of the following:
that at least one configuration parameter in the target PRS configuration set comprises multiple optional values;
that at least one configuration parameter in the target PRS configuration set does not satisfy a preset requirement of the terminal;
that at least one configuration parameter in the target PRS configuration set is a default configuration parameter;
that at least one configuration parameter in the target PRS configuration set comprises maximum configurable range information; and
that at least one configuration parameter in the target PRS configuration set comprises a maximum value of selectable values of the configuration parameter.

13. The method according to claim 11 or 12, wherein the configuration parameter comprises at least one of the following:
bandwidth information for a PRS corresponding to the identification information of the target PRS configuration set;
a start time for sending the PRS corresponding to the identification information of the target PRS configuration set;
an end time for sending the PRS corresponding to the identification information of the target PRS configuration set;
a duration for sending the PRS corresponding to the identification information of the target PRS configuration set;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

14. The method according to claim 6, wherein the on-demand PRS request information comprises at least one of the following:
indication information for indicating an on-demand PRS;
assistance information for the on-demand PRS;
location information of the terminal;
expected angle of departure information;
measurement information for a synchronization signal block SSB measured by the terminal; and
measurement information for a channel state information reference signal CSI-RS measured by the terminal.

15. The method according to claim 1, wherein after the sending, by the terminal, positioning assistance data request information, the method further comprises:
receiving, by the terminal, second positioning assistance data, wherein the second positioning assistance data comprises at least one of the following:
configuration information for a target PRS, wherein the target PRS is a PRS selected on demand; and
activation information for the target PRS.

16. The method according to claim 15, wherein the target PRS satisfies at least one of the following:
a resource of the target PRS does not conflict with a resource of a first PRS in a same cell, wherein the first PRS is another PRS in the same cell as the target PRS;
a resource of the target PRS in a first serving cell does not conflict with PRS resources of the first serving cell;
a resource of the target PRS in the first serving cell does not conflict with PRS resources of a second serving cell, wherein the first serving cell and the second serving cell are different serving cells;
a resource of the target PRS in a non-serving cell does not conflict with PRS resources of a serving cell;
a resource of the target PRS in a first non-serving cell does not conflict with PRS resources of the first non-serving cell; and
a resource of the target PRS in the first non-serving cell does not conflict with PRS resources of a second non-serving cell, wherein the first non-serving cell and the second non-serving cell are different non-serving cells.

17. The method according to claim 15, wherein a second PRS is a PRS other than the target PRS, and in a case that a resource of the target PRS conflicts with a resource of the second PRS, the method further comprises one of the following:
receiving, by the terminal, the target PRS or the second PRS based on a priority of the target PRS and a priority of the second PRS;
expecting, by the terminal, to cancel sending of the second PRS;
receiving, by the terminal, the target PRS and the second PRS; and
receiving, by the terminal, indication information for indicating whether the second PRS is sent.

18. The method according to claim 6, wherein the method further comprises:
receiving, by the terminal, second key information, wherein the second key information is used for parsing assistance information for a target PRS, and the target PRS is a PRS selected on demand.

19. The method according to claim 18, wherein the second key information comprises validity information, and the validity information comprises at least one of the following:
time information;
region information;
event information; and
spatial relation information.

20. The method according to claim 18, wherein the second key information comprises key information of at least one key; and
the at least one key comprises at least one of the following:
static key;
dynamic key;
on-demand key; and
at least two levels of keys.

21. The method according to claim 20, wherein the second key information further comprises at least one of the following:
validity identification information;
group identification information;
scrambling code identification information;
usable broadcast type information;
cell identification information;
TRP identification information;
beam identification information for sending a positioning reference signal;
beam direction information for sending the positioning reference signal;
identification information of the positioning reference signal; and
spatial relation identification information.

22. A positioning method, comprising:
sending, by a network-side device, first positioning assistance data to a terminal, wherein the first positioning assistance data is used to indicate configuration information for an on-demand PRS;
and/or,
receiving, by the network-side device, positioning assistance data request information sent by a terminal, wherein the positioning assistance data request information is used to indicate related request information for an on-demand PRS.

23. The method according to claim 22, wherein the first positioning assistance data comprises at least one of the following:
first key information used for parsing the on-demand PRS;
at least one PRS configuration set used for on-demand selection;
resource information used for the on-demand PRS; and
response information used for the on-demand PRS.

24. The method according to claim 23, wherein the resource information used for the on-demand PRS comprises at least one of the following:
a time-domain resource used for an on-demand PRS by a network-side device;
a frequency-domain resource used for the on-demand PRS by the network-side device;
a bandwidth used for the on-demand PRS by the network-side device;
a duration used for the on-demand PRS by the network-side device;
a periodicity used for the on-demand PRS by the network-side device;
a time-domain offset used for the on-demand PRS by the network-side device;
a start time used for the on-demand PRS by the network-side device;
a symbol used for the on-demand PRS by the network-side device; and
a repetition count used for the on-demand PRS by the network-side device.

25. The method according to claim 23, wherein the resource information used for the on-demand PRS comprises at least one of the following:
a maximum number of positioning reference signal resources used for the on-demand PRS by a network-side device;
a maximum positioning reference signal resource sets used for the on-demand PRS by the network-side device;
a maximum number of TRPs used for the on-demand PRS by the network-side device;
a maximum bandwidth used for the on-demand PRS by the network-side device;
a maximum duration used for the on-demand PRS by the network-side device;
a minimum periodicity used for the on-demand PRS by the network-side device;
a maximum periodicity used for the on-demand PRS by the network-side device;
an earliest time-domain offset used for the on-demand PRS by the network-side device;
an earliest start time used for the on-demand PRS by the network-side device;
a maximum number of symbols used for the on-demand PRS by the network-side device; and
a maximum repetition count used for the on-demand PRS by the network-side device.

26. The method according to claim 23, wherein the response information used for the on-demand PRS comprises at least one of the following:
error indication information;
error type information;
information of no available resource;
error cause information;
acknowledgment ACK information;
negative acknowledgment NACK information;
information of not supporting on-demand PRS;
identification information of a target PRS configuration set, wherein the at least one PRS configuration set comprises the target PRS configuration set;
request success indication information or request failure indication information;
configuration success indication information or configuration failure indication information; and
configuration information for the target PRS configuration set.

27. The method according to claim 22, wherein the positioning assistance data request information carries at least one of the following:
on-demand positioning reference signal PRS request information; and
on-demand PRS key request information.

28. The method according to claim 22, wherein the method further comprises:
receiving, by the network-side device, on-demand PRS key request information, wherein the on-demand PRS key request information is carried in a preset service request message, a preset registration request message, or a long term evolution positioning protocol message.

29. The method according to claim 26, wherein the at least one PRS configuration set comprises a target PRS configuration set.

30. The method according to claim 29, wherein the positioning assistance data request information carries on-demand PRS request information; and
the on-demand PRS request information comprises at least one of the following:
identification information of the target PRS configuration set;
location information of the terminal; and
configuration parameter.

31. The method according to claim 30, wherein the configuration parameter comprises at least one of the following:
bandwidth information for a PRS corresponding to the identification information of the target PRS configuration set;
a start time for sending the PRS corresponding to the identification information of the target PRS configuration set;
an end time for sending the PRS corresponding to the identification information of the target PRS configuration set;
a duration for sending the PRS corresponding to the identification information of the target PRS configuration set;
measurement window information for measuring the on-demand PRS;
configuration window information for configuring the on-demand PRS;
a selected transmission and reception point TRP set;
the number of selected TRPs;
identification information of a selected TRP;
a selected positioning reference signal resource set;
a selected positioning reference signal resource;
identification information of a selected positioning reference signal;
the number of selected positioning reference signal resource sets;
the number of selected positioning reference signal resources; and
identification information of a selected positioning reference signal resource set.

32. The method according to claim 27, wherein the on-demand PRS request information comprises at least one of the following:
indication information for indicating an on-demand PRS;
assistance information for the on-demand PRS;
location information of the terminal;
expected angle of departure information;
measurement information for a synchronization signal block SSB measured by the terminal; and
measurement information for a channel state information reference signal CSI-RS measured by the terminal.

33. The method according to claim 22, wherein the method further comprises:
sending, by the network-side device, second positioning assistance data, wherein the second positioning assistance data comprises at least one of the following:
configuration information for a target PRS, wherein the target PRS is a PRS selected on demand; and
activation information for the target PRS.

34. The method according to claim 33, wherein the target PRS satisfies at least one of the following:
a resource of the target PRS does not conflict with a resource of a first PRS in a same cell, wherein the first PRS is another PRS in the same cell as the target PRS;
a resource of the target PRS in a first serving cell does not conflict with PRS resources of the first serving cell;
a resource of the target PRS in the first serving cell does not conflict with PRS resources of a second serving cell, wherein the first serving cell and the second serving cell are different serving cells;
a resource of the target PRS in a non-serving cell does not conflict with PRS resources of a serving cell;
a resource of the target PRS in a first non-serving cell does not conflict with PRS resources of the first non-serving cell; and
a resource of the target PRS in the first non-serving cell does not conflict with PRS resources of a second non-serving cell, wherein the first non-serving cell and the second non-serving cell are different non-serving cells.

35. The method according to claim 33, wherein a second PRS is a PRS other than the target PRS, and in a case that a resource of the target PRS conflicts with a resource of the second PRS, the method further comprises one of the following:
sending, by the network-side device, the target PRS or the second PRS based on a priority of the target PRS and a priority of the second PRS;
expecting, by the network-side device, to cancel sending of the second PRS;
sending, by the network-side device, the target PRS and the second PRS; and
sending, by the network-side device, indication information for indicating whether the second PRS is sent.

36. The method according to claim 22, wherein the method further comprises:
sending, by the network-side device, second key information, wherein the second key information is used for parsing assistance information for a target PRS, and the target PRS is a PRS selected on demand.

37. The method according to claim 36, wherein the second key information comprises validity information, and the validity information comprises at least one of the following:
time information;
region information;
event information; and
spatial relation information.

38. The method according to claim 36, wherein the second key information comprises key information of at least one key; and
the at least one key comprises at least one of the following:
static key;
dynamic key;
on-demand key; and
at least two levels of keys.

39. The method according to claim 38, wherein the second key information further comprises at least one of the following:
validity identification information;
group identification information;
scrambling code identification information;
usable broadcast type information;
cell identification information;
TRP identification information;
beam identification information for sending a positioning reference signal;
beam direction information for sending the positioning reference signal;
identification information of the positioning reference signal; and
spatial relation identification information.

40. A positioning apparatus, comprising:
a receiving module, configured to receive first positioning assistance data, wherein the first positioning assistance data is used to indicate configuration information for an on-demand positioning reference signal PRS;
and/or,
a sending module, configured to send positioning assistance data request information, wherein the positioning assistance data request information is used to indicate related request information for an on-demand PRS.

41. The apparatus according to claim 40, wherein the first positioning assistance data comprises at least one of the following:
first key information used for parsing the on-demand PRS;
at least one PRS configuration set used for on-demand selection;
resource information used for the on-demand PRS; and
response information used for the on-demand PRS.

42. The apparatus according to claim 40, wherein the positioning assistance data request information carries at least one of the following:
on-demand positioning reference signal PRS request information; and
on-demand PRS key request information.

43. A positioning apparatus, comprising:
a sending module, configured to send first positioning assistance data, wherein the first positioning assistance data is used to indicate configuration information for an on-demand positioning reference signal PRS;
and/or,
a receiving module, configured to receive positioning assistance data request information, wherein the positioning assistance data request information is used to indicate related request information for an on-demand PRS.

44. The apparatus according to claim 43, wherein the first positioning assistance data comprises at least one of the following:
first key information used for parsing the on-demand PRS;
at least one PRS configuration set used for on-demand selection;
resource information used for the on-demand PRS; and
response information used for the on-demand PRS.

45. The apparatus according to claim 43, wherein the positioning assistance data request information carries at least one of the following:
on-demand positioning reference signal PRS request information; and
on-demand PRS key request information.

46. A terminal, comprising a processor, a memory, and a program or instructions stored in the memory and capable of running on the processor, wherein when the program or the instructions are executed by the processor, the steps of the positioning method according to any one of claims 1 to 21 are implemented.

47. A network-side device, comprising a processor, a memory, and a program or instructions stored in the memory and capable of running on the processor, wherein when the program or the instructions are executed by the processor, the steps of the positioning method according to any one of claims 22 to 39 are implemented.

48. A readable storage medium, wherein the readable storage medium stores a program or instructions, and when the program or the instructions are executed by a processor, the steps of the positioning method according to any one of claims 1 to 21 are implemented; or when the program or the instructions are executed by a processor, the steps of the positioning method according to any one of claims 22 to 39 are implemented.

49. A chip, comprising a processor and a communications interface, wherein the communications interface is coupled to the processor, and the processor is configured to execute a program or instructions to implement the steps of the positioning method according to any one of claims 1 to 21 or the steps of the positioning method according to any one of claims 22 to 39.

50. A computer program product, wherein when the computer program product is executed by at least one processor, the steps of the positioning method according to any one of claims 1 to 21 are implemented, or the steps of the positioning method according to any one of claims 22 to 39 are implemented.

51. A communication device, configured to perform the steps of the positioning method according to any one of claims 1 to 21 or the steps of the positioning method according to any one of claims 22 to 39.
